Europäisches Patentamt

European Patent Office

Office européen des brevets

(19)

(11) Veröffentlichungsnummer: **0 421 112 B1**

# EUROPÄISCHE PATENTSCHRIFT

(12)

(45) Veröffentlichungstag der Patentschrift: **25.05.94**

(51) Int. Cl.$^5$: **F16H  3/54**, F16H 57/10, F16H 1/28

(21) Anmeldenummer: **90116238.8**

(22) Anmeldetag: **24.08.90**

Die Akte enthält technische Angaben, die nach dem Eingang der Anmeldung eingereicht wurden und die nicht in dieser Patentschrift enthalten sind.

(54) **Verstellbarer Antrieb mit Planetenradgetriebe.**

(30) Priorität: **02.10.89 JP 258226/89**

(43) Veröffentlichungstag der Anmeldung:
**10.04.91 Patentblatt  91/15**

(45) Bekanntmachung des Hinweises auf die Patenterteilung:
**25.05.94 Patentblatt  94/21**

(84) Benannte Vertragsstaaten:
**DE FR GB IT SE**

(56) Entgegenhaltungen:
EP-A- 0 156 067          DE-A- 1 427 867
DE-A- 3 010 019          DE-U- 8 415 266
US-A- 3 561 292          US-A- 4 674 360

**PATENT ABSTRACTS OF JAPAN vol. 7, no. 95 (M-209)(1240) 21 April 1983,& JP-A-58 017244 (MATETSUKUSU) 01 Februar 1983,**

(73) Patentinhaber: **MATEX CO. LTD.**
**2-6, Obasecho**
**Tennoji-ku**
**Osaka-shi Osaka(JP)**

(72) Erfinder: **Igaku, Shoji**
**365-2 Matuzuka**
**Yamatotakada-shi, Nara(JP)**

(74) Vertreter: **Patentanwälte Czowalla . Matschkur + Partner**
**Postfach 11 91 09**
**D-90101 Nürnberg (DE)**

EP 0 421 112 B1

**Beschreibung**

Die Erfindung richtet sich auf ein Planetenradgetriebe für einen verstellbaren Antrieb, bei welchem ein innenverzahnter Ring entweder im umlaufenden oder im stillstehenden Zustand gehalten werden kann. Im Ruhezustand überträgt das Planetenradgetriebe ein Drehmoment, jedoch im umlaufenden Zustand vermittelt es kein Drehmoment. Die Übertragung oder Nichtübertragung eines Drehmoments kann alternativ gewählt werden.

Ein Planetenradgetriebe besteht aus einem Sonnenrad, Planetenrädern, einem Planetenradträger und einer Innenverzahnung. Im allgemeinen werden Planetenradgetriebe zur Verzögerung oder zur Beschleunigung benutzt. Sie haben die geometrische Eigenschaft, daß die Antriebswelle und die Abtriebswelle in einer Linie verlaufen. Bei einem Planetenradgetriebe wird die zu übertragende Drehkraft in die drei oder vier Planetenräder aufgeteilt, die in rotationssymmetrischer Stellung angeordnet sind. Infolgedessen ist der Übertragungswirkungsgrad hoch, weil das Drehmoment gleichmäßig auf die entsprechenden Planetenräder verteilt ist. Im Falle einer Verzögerung ist die Eingangswelle mit dem Sonnenrad verbunden, und die Ausgangswelle steht mit dem Planetenradträger in Verbindung. An einem Gehäuse ist die Innenverzahnung angebracht. In diesem Fall ist das Reduktionsverhältnis durch die folgende Gleichung gegeben

$$R = 1 + \frac{I}{S} \qquad (1)$$

wobei S und I die Zähnezahl des Sonnenrades und der Innenverzahnung wiedergeben.

In den meisten dieser Fälle wird das Planetenradgetriebe lediglich als Verzögerungselement mit einem feststehenden Reduzierungsverhältnis benutzt, wobei die Innenverzahnung feststeht. In einigen wenigen Fällen hingegen ist die Innenverzahnung drehbar angeordnet, um das Reduzierungsverhältnis kontinuierlich verändern zu können. Eine zusätzliche Verzahnung ist an der Außenfläche des innenverzahnten Ringes angeordnet, der um die gemeinsame zentrale Achse rotiert. Ein weiteres Verstellrad (T) kämmt mit der Außenverzahnung. In diesen Fällen bewirken sowohl das Sonnenrad als auch die Innenverzahnung die Eingangsdrehung, während der Planetenradträger die Ausgangsrotation ausführt.

Die Winkelgeschwindigkeit des Sonnenrades, der Innenverzahnung und des Planetenradträgers sind mit $\Omega s$, $\Omega i$ und $\Omega c$ bezeichnet. Die zwischen ihnen bestehende Beziehung ergibt sich gemäß

$$S \, \Omega s + I \, \Omega i = (S + I) \, \Omega c \qquad (2).$$

Die Winkelgeschwindigkeit $\Omega c$ des Planetenradträgers steht nicht mehr im Verhältnis zu der Winkelgeschwindigkeit $\Omega s$ des Sonnenrades. Die Winkelgeschwindigkeit des Planetenradträgers kann durch Veränderung der Geschwindigkeit $\Omega i$ der Innenverzahnung eingestellt werden. Die Zähnezahl des Verstellrades T ist mit T, die Winkelgeschwindigkeit mit $\Omega t$ bezeichnet. Das Verstellrad T kämmt mit der Außenverzahnung mit der Zähnezahl E. Das außenverzahnte Rad E und die Innenverzahnung I sind beide an den beiden Flächen ein und desselben Ringes angeordnet. Die Begrenzung des Zahneingriffs wird ausgedrückt durch

$$E \, \Omega i = - T \, \Omega t \qquad (3).$$

Ergänzt man die Gleichung (3) durch die Gleichung (2) so erhält man die folgende Beziehung

$$S \, \Omega s - \frac{IT}{E} \, \Omega t = (S + 1) \, \Omega c \qquad (4).$$

Daraus folgt, daß die Winkelgeschwindigkeit $\Omega c$ des Planetenradträgers durch die Drehung des Verstellrades T verändert werden kann, obwohl die Winkelgeschwindigkeit des Sonnenrades konstant gehalten wird. In diesen Fällen wird die Innenverzahnung positiv und bestimmbar in Rotation versetzt, um die Drehung des Planetenradträgers zu steuern. Der Ring, an welchem die Innenverzahnung und die Außenverzahnung angebracht sind, wird als Planetenring bezeichnet. Der Außenring muß hierbei mittels eines Lagers drehbar angeordnet sein. Die Lagerflächen dieses Lagers bestehen aus seitlichen Zylinderflächen, deren Durchmesser geringer ist als derjenige des Wälzkreises der Außenverzahnung des Außenringes. Die Außenverzahnung ist zwischen zwei seitlichen Lagerflächen angeordnet.

Außer dem einstellbaren Reduktionsverhältnis des oben bezeichneten Planetenradgetriebes, weisen einige Arten von Planetenradgetrieben Innenverzahnungen auf, die in einem Gehäuse abgestützt sind, um äußere Stöße zu vermindern. In diesem Fall ist der innenverzahnte Ring elastisch in einem Gehäuse abgestützt. Beispielsweise kann das Gehäuse eine Anzahl innerer Vorsprünge und der innenverzahnte Ring

EP 0 421 112 B1

eine Anzahl äußerer Vorsprünge aufweisen. Die inneren Vorsprünge des Gehäuses greifen in die äußeren Vorsprünge des innenverzahnten Ringes ein, und elastischer Werkstoff, wie z. B. Gummi oder Kunststoffe, füllen den Zwischenraum zwischen den äußeren und inneren Vorsprüngen aus. In einem normalen Zustand, in welchem sich die Drehmomentübertragung unterhalb eines bestimmten Wertes befindet, steht der innenverzahnte Ring fest. Ist ein übergrosses Drehmoment auf die Abtriebswelle zu übertragen, läuft der innenverzahnte Ring um, um äußere Einwirkungen zu mindern (z. B. bei einem hohen Drehmoment). Diese Arten von Getrieben sind bezeichnet durch GB A 2 107 425 und GB 1 116 791.

Um ein überschüssiges Drehmoment zu absorbieren, braucht der innenverzahnte Ring nicht durch ein Lager abgestützt zu werden, da der innenverzahnte Ring bei Einwirkng eines äußeren Stoßes, um einen sehr kleinen Winkel umläuft. Der innenverzahnte Ring hat keine Außenverzahnng an seiner Außenfläche, da die Innenverzahnung nicht positiv rotiert.

Es gibt jedoch zwei Arten von Planetenradgetrieben, bei welchen der innenverzahnte Ring in einem beliebigen Maß rotiert. Eines hiervon dient zur Steuerung der Reduzierungsrate durch positives Verdrehen der Innenverzahnung. Das andere ist eine Einrichtung zur Minderung äußerer Stöße dadurch, daß die Innenverzahnung um ein geringes Maß drehbar ist.

In jedem Fall rotiert der innenverzahnte Ring jedoch nicht frei. Eine freie Drehung der Innenverzahnung ist unerwünscht. Unter "freie Rotation" ist ein willkürlicher Drehwinkel und eine willkürliche Drehgeschwindigkeit zu verstehen. Im Falle einer Einrichtung zur Verstellung des Reduktionsmaßes wird die Winkelgeschwindigkeit des innenverzahnten Rings in bestimmter Weise durch ein zusätzliches Ritzel gesteuert. Im Falle einer Stöße absorbierenden Einrichtung rotiert der innenverzahnte Ring geringfügig. Der Drehwinkel des innenverzahnten Ringes ist weniger als 90 Grad. In den meisten Fällen liegt er unter 10 Grad.

In beiden dieser Fälle, bei welchen die Innenverzahnung auf beliebige Weise umläuft, gibt der Planetenradträger ein Drehmoment ab. Es gibt jedoch kein Planetenradgetriebe, bei welchem der Planetenradträger unter bestimmten Bedingungen ein Drehmoment liefert und unter anderen Bedingungen kein Drehmoment liefert.

Aufgabe der Erfindung ist es deshalb, ein Planetenradgetriebe zur intermittierenden Abgabe eines Drehmoments von dem Sonnenrad auf den Planetenradträger zu schaffen. Das Planetenradgetriebe gemäß der Erfindung hat hierzu zwei Betriebszustände, einen Übertragungszustand und einen Unterbrechungszustand. Beide Betriebszustände können jederzeit von einem zum anderen umgeschaltet werden. Unter dem Übertragungszustand ist derjenige zu verstehen, bei welchem eine Drehmomentabgabe unter bestimmter Reduzieruung auf den Planetenradträger erfolgt. Die Rotation des Sonnenrades ist in bestimmter Weise auf die Rotation des Trägers abgestellt. Deshalb sind die Verhältnisse der Winkelgeschwindigkeiten und der Drehmomente zwischen dem Sonnenrad und dem Träger absolut konstant. Bei dem als Unterbrecherzustand bezeichneten Betriebszustand wird kein Drehmoment von dem Sonnenrad auf den Planetenradträger übertragen. Die Rotation des Sonnenrades ist völlig von dem Träger getrennt. Es besteht keine Beziehung zwischen dem Sonnenrad und dem Träger bezüglich der Winkelgeschwindigkeiten und Drehmomente. Die Winkelgeschwindigkeit oder das Drehmoment des Trägers ist nicht durch die Winkelgeschwindigkeit oder das Drehmoment des Sonnenrades bestimmt.

Im folgenden wird das Planetenradgetriebe gemäß der Erfindung näher erläutert. Dieses Getriebe weist ein Sonnenrad, eine Anzahl von Planetenrädern, die das Sonnenrad umschließen und mit diesem kämmen, einen innenverzahnten Planetenring, der die Planetenräder umschließt und mit diesen kämmt, und einen drehbaren Planetenradträger auf, der die Planetenräder über deren Wellen trägt. Dieses Getriebe zeichnet sich dadurch aus, daß der innenverzahnte Ring zwei äußere Gleitflächen an beiden Seiten der Außenwand und eine Einstellverzahnung in einer Nut in der Mitte der Außenwand aufweist, wobei die äußeren Gleitflächen durch Lager drehbar abgestützt sind und ein Anschlag vorgesehen ist, der verhindert, daß der die Innenverzahnung tragende Ring durch Eingriff in die Einstellverzahnung rotiert.

Im folgenden wird die Wirkungsweise des erfindungsgemäßen Planetengetriebes im einzelnen erläutert.

Das Planetenradgetriebe kann zwei unteschiedliche Betriebszustände aufweisen und in einer beliebigen Zeit von einem zum anderen Betriebszustand wechseln. Einer der Betriebszustände dient der Übersetzung, bei welcher das Drehmoment von dem Sonnenrad auf den Planetenradträger übertragen wird. In diesem Betriebszustand steht die Anschlageinrichtung im Eingriff mit der Stellverzahnung des innenverzahnten Ringes. Dadurch befindet sich dieser im Ruhezustand. Da der innenverzahnte Ring fixiert ist ($\Omega i = 0$), wird wie bei einem konventionellen Planetenradgetriebe eine verminderte Ausgangsdrehung auf den Innenring übertragen. Führt man $\Omega i = 0$ in die Gleichung (2) ein, ergibt sich die Übersetzungsrate R wie folgt

$$R = \frac{\Omega s}{\Omega c} = 1 + \frac{1}{S} \qquad (5)$$

was der Gleichung (1) entspricht. Dabei ist das Verhältnis der Drehmomente äquivalent zu R. Ts und Tc

3

bezeichnen die Drehmomente des Sonnenrades und des entsprechenden Planetenradträgers. Das Verhältnis S der Drehmomente ergibt sich wie folgt:

$$S = \frac{Tc}{Ts} = 1 + \frac{1}{S} = R \qquad (6)$$

Aus dieser Gleichung folgt, daß der innenverzahnte Getriebering stillsteht. Ein Problem dieses Betriebszustandes ist in der Konzentration des Reaktionsdrehmoments an der Anschlageinrichtng zu sehen. Bei einem üblichen Planetenradgetriebe steht der gesamte Umfang des innenverzahnten Getrieberings mit der gesamten Innenfläche des Gehäuses in Berührung und das durch das Sonnenrad und dem Planetenradträger erzeugte Reaktionsdrehmoment des innenverzahnten Rades wird von deren gesamten Gehäusefläche abgenommen. Dagegen wird bei der erfindungsgemäßen Vorrichtung das gesamte Reaktionsdrehmoment $\Sigma$ des innenverzahnten Rades auf die Anschlageinrichtung konzentriert. Das Drehmoment $\Sigma$, welches auf die Anschlageinrichtung wirkt, ist

$$\Sigma = - \frac{I}{S + I} \; Tc \qquad (7)$$

$$= \frac{I}{S} \; Ts \qquad (8),$$

wobei das im Uhrzeigersinn wirkende Drehmoment im Hinblick auf das Zeichen für das Drehmoment positiv ist. Das Zeichen des Sonnenrad-Drehmoments Ts ist umgekehrt gegenüber dem Drehmoment Tc des Planetenradträgers. Die Beziehung zwischen Ts und Tc lautet

$$Tc = - \frac{S + I}{S} \; Ts \qquad (9).$$

Die Formel (7) läßt erkennen, daß ein geringfügig kleineres Drehmoment als das Drehmoment Tc des Planetenradträgers örtlich auf die Anschlageinrichtung einwirkt. Dadurch sind die Anschlageinrichtung und die Stellverzahnung stark genug, um das konzentrierte Widerstandsdrehmoment aufzunehmen.

Ein anderer auf die erfindungsgemäße Vorrichtung zutreffender Gesichtspunkt ist ein Sperrzustand, bei welchem das Drehmoment nicht von dem Sonnenrad auf den Planetenradträger übertragen wird. In diesem Sperrzustand ist die Stellverzahnung von der Sperreinrichtung gelöst, und der innenverzahnte Ring rotiert frei ohne Widerstandsdrehmoment. Die freie Rotation des innenverzahnten Rings ist ein besonders bemerkenswertes Merkmal des Sperrzustandes. Durch dieses Merkmal kann das Planetenradgetriebe gemäß der Erfindung deutlich unterschieden werden von den beiden Typen von Getrieben des obenbeschriebenen Standes der Technik. Bei diesem vermag der innenverzahnte Ring nicht und in keinem Zustand frei zu rotieren. Die Verstellvorrichtung für das Reduktionsmaß dreht die Innenverzahnung positiv über ein Stellrad T. Die Stoßdämpferanordnung verhindert, daß der innenverzahnte Ring sich um mehr als etwa 10 Grad dreht. Bei den beiden vorbekannten Planetenradgetrieben läuft der innenverzahnte Ring mit einem bestimmten Drehmoment, welches größer ist als das auf den Träger einwirkende Drehmoment. Dagegen rotiert bei dem erfindungsgemäßen Planetenradgetriebe die Innenverzahnung frei ohne Drehmoment im Sperrzustand.

Dieser Umstand wird eine neue und überraschende Beziehung zwischen den Drehmomenten. Ts, $\Sigma$ und Tc bezeichnen die Drehmomente, die von Außengliedern auf das Sonnenrad, die Innenverzahnung und den Planetenradträger einwirken. Insgesamt ist die Summe der auf einem im stationären Zustand befindlichen Körper einwirkenden Drehmomente gleich Null, weil die Winkelbeschleunigung des Körpers ebenfalls Null ist. Ein Planetenradgetriebe erhält sein Drehmoment durch ein Sonnenrad, einen Planetenradträger und einen innenverzahnten Ring. Dadurch ist die Summe der Drehmomente Ts, $\Sigma$ und Tc gleich Null, nämlich

$$Ts + \Sigma + Tc = 0 \qquad (10).$$

Die freie Rotation des innenverzahnten Rings bedeutet, daß das Drehmoment, welches von einem äußeren Glied auf die Innenverzahnung übertragen wird, null ist. Dies ergibt sich einfach durch

$$\Sigma = 0 \quad (11).$$

Das Produkt des Drehmoments durch die Winkelgeschwindigkeit entspricht der in der Zeiteinheit geleisteten Arbeit. Da die Summe der auf ein Planetenradgetriebe übertragenen Arbeit stets Null ist, ergibt sich die folgende energetische Gleichung

$$Ts \, \Omega s + \Sigma \, \Omega i + Tc \, \Omega c = 0 \quad (12).$$

Mit der kinetischen Gleichung (2), der dynamischen Gleichung, der energetischen Gleichung (12) und einer anderen Beziehung kann das Maß der Winkelgeschwindigkeiten und der Drehmomente einfach bestimmt werden. Bei einem konventionellen Planetenradgetriebe (entsprechend dem Übertragungszustand gemäß der Erfindung) wird eine weitere Beziehung ausgedrückt durch $\Omega = 0$, da der innenverzahnte Ring durch ein Gehäuse fixiert ist. Substituiert man diese zusätzliche Beziehung in die drei Gleichungen, ergibt sich (5), (6), (8) und (9) entsprechend einer konventionellen Vorrichtung. Im Sperrzustand gemäß der Erfindung ergibt sich eine zusätzliche Beziehung durch die Gleichung (11), jedoch kann diese nicht das Maß der dynamischen Variablen, nämlich Drehmomente und Winkelgeschwindigkeiten, hier bestimmen. Unter Berücksichtigung der Gleichungen (11), (2), (10) und (12) ergibt sich

$$S \, \Omega s + I \, \Omega i = (S + I) \, \Omega c \quad (13)$$

$$Ts + Tc = 0 \quad (14)$$

$$Ts \, \Omega s + Tc \, \Omega c = 0 \quad (15).$$

Diese gleichzeitigen Gleichungen lassen sich leicht lösen. Hinsichtlich der Drehmomente ergibt sich

$$Ts = - Tc \quad (16).$$

Dann ist $Ts \neq 0$, und für die Winkelgeschwindigkeiten ergibt sich die Gleichung

$$\Omega c = \Omega s = \Omega i \quad (17).$$

Daraus folgt, daß sämtliche Elemente eines Planetenradgetriebes in einem Körper rotieren, da drei bewegliche Elemente mit den gleichen Achsen bei gleicher Winkelgeschwindigkeit umlaufen. Dies ist jedoch eine unrealistische Begrenzung, bei welcher die Reibung zwischen dem Sonnenrad und den Planetenrädern oder zwischen den Planetenrädern und der Innenverzahnung sehr groß ist. Ein solcher volldrehbarer Zustand tritt jedoch nicht auf, weil die Reibung in einem Planetenradgetriebe gering ist. Die Gleichung (17) ist eine unrealistische Lösung. Wenn entsprechend der Gleichung (11) in der Tat $\Sigma = 0$ ist, verschwinden die Drehmomente der Gleichung (16): $Ts = 0$, $Tc = 0$. Dann haben die Gleichungen (14) und (15) keine Bedeutung. Lediglich die kinetische Gleichung (2) ist bedeutsam, denn

$$S \, \Omega s + I \, \Omega i = (S + I) \, \Omega c \quad (18)$$

$$Ts = 0 \quad (19)$$

$$Tc = 0 \quad (20).$$

Die Gleichung (18) ergibt, daß dann, wenn $\Omega s$ bestimmt ist, $\Omega i$ und $\Omega c$ sind unbestimmt. Die Gleichungen (19) und (20) ergeben, daß zwischen dem Sonnenrad und dem Planetenradträger kein Drehmoment übertragen wird. Im Sperrzustand ist das ausgehende Drehmoment des Planetenradträgers gleich Null. Natürlich ist das Eingangdrehmoment des Sonnenrades ebenfalls Null. Daher befinden sich das Sonnenrad, die Planetenräder und der Planetenradträger in freier Drehung ebenso wie der innenverzahnte Ring im Sperrzustand.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

Fig. 1    die Seitenansicht eines erfindungsgemäßen Planetenradgetriebes;

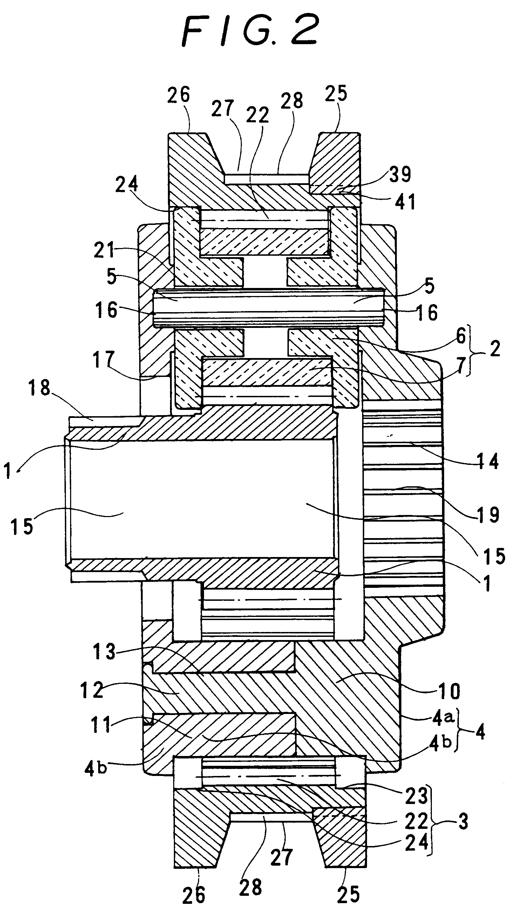

Fig. 2    einen Seitenschnitt;

Fig. 3    eine teilweise geschnittene Seitenansicht des Hauptteils des innenverzahnten Ringes und

Fig. 4    eine teilweise geschnittene Seitenansicht eines zusätzlichen Teils des innenverzahnten Ringes.

Im Zentrum befindet sich das Sonnenrad 1. Es kämmt mit drei oder vier Planetenrädern 2, die es umschließen. Die Planetenräder 2 kämmen ihrerseits mit einen innenverzahnten Kranz 3, der die Planetenräder 2 umschließt. Die Planetenräder 2 sind durch Planetenradwellen 5, die in einem Träger 4 an beiden Enden fixiert sind, drehbar gelagert.

Der Träger 4 besteht aus einer kreisförmigen Scheibe 4a und einer kreisförmigen Trägerscheibe 4b. Bei der in der Zeichnung wiedergegebenen Ausführungsform besteht das Planetenrad 2 aus zwei Planetenradscheiben 6 an beiden Seiten und einem mittleren Teil 7. Dieses Planetenradteil 7 kämmt mit dem Sonnenrad 1 zur Übertragung der Drehmomente. Die Planetenradscheibe 6 hat keinen Getriebeteil jedoch eine glatte Außenfläche. Der Durchmesser der Außenfläche der Planetenradscheibe 6 ist größer als der Durchmesser des Zahnkantenkreises des Planetenradteils 6. An einem Vorsprung der Planetenradscheibe 6 ist in axialer Richtung eine Wellenbohrung 21 angebracht. Die Planetenradwelle 5 durchsetzt diese Bohrung 21. Das Planetenradteil 7 ist ein zylindrisches Rad mit glatter Innenfläche. Die Innenfläche des Planetenradteils 7 wird durch den Vorsprung der Planetenradscheiben 6 abgestützt. Zwischen der Innenfläche der Planetenradscheibe 7 und der Außenfläche des Vorsprungs der Planetenradscheibe 6 befindet sich ein kleiner Zwischenraum. Dieser Zwischenraum ermöglicht eine relative Drehung der Planetenradscheibe 6 gegenüber dem Planetenradteil 7. Die beiden Enden der Planetenradwelle 5 sind in Hohlbohrungen an der Innenseite der Hauptträgerscheibe 4a und der weiteren Trägerscheibe 4b gelagert. Die Hauptträgerscheibe 4a und die Nebenscheibe 4b sind an ihrer Innenfläche an den Mittelpunkten zwischen zwei benachbarten Planetenradachsen mit Vorsprüngen 10 und 11 versehen. An dem Vorsprung 10 der Hauptträgerscheibe 4a ist ein dünner säulenförmiger Fortsatz 12 angebracht. In dem Vorsprung 11 der Nebenträgerscheibe 4b ist eine axiale Buchse 13 vorgesehen. Die Nebenträgerscheibe 4b ist mit der Hauptträgerscheibe 4a dadurch verbunden, daß die Ansätze 12 in die Buchsen 13 eingreifen und ihre Enden abgeflacht sind und über die Buchsen 13 vorstehen. Bei der wiedergegebenen Ausführungsform bestehen die Trägerscheiben 4a und 4b aus Metall, z. B. Aluminium, Zink oder einer gesinterten Eisenlegierung. Das Sonnenrad 1 ist zylindrisch gestaltet und mit einer Bohrung 15 versehen, durch welche eine in der Zeichnung nicht wiedergegebene andere Welle hindurchgeführt werden kann. Der Mittelteil des zylindrischen Sonnenrads erstreckt sich axial aus einer Öffnung 17 der Nebenträgerscheibe 4b. An der Außenfläche dieses hervorstehenden Teils des Sonnenrades 1 ist eine involute Teilwellennut 18 angebracht, die der Kupplung mit einem nicht dargestellten eingreifenden zylindrischen Teil dient. Eine Trägerbohrung 14 ist axial in der Mitte der Hauptträgerscheibe 4a angeordnet, um diese mit einer Augangswelle zu verbinden, die wiederum nicht dargestellt ist. Eine entsprechende Einrichtung zur Drehmomentenübertragung kann an der Innenfläche dieser Trägerbohrung 14 angebracht sein. Bei dieser Ausführungsform dient eine involute Kerbverzahnung 19 zur Drehmomentenübertragung.

Entsprechend der dreifachen Anordnung des Planetenrads 3 ist der die Innenverzahnung treibende Ring 3 ebenfalls eine solche dreifache Gestaltung. So ist in der Mitte der Innenfläche des innenverzahnten Rings 3 ein Innengetriebeteil 22 vorgesehen, welches mit dem Planetenradteil 7 zur Übertragung des Drehmoments kämmt. Die Innenteile 22 und 7 haben die gleiche Größe. Und an den Seiten des Innengetriebeteils 22 sind zwei innere Zylinderflächen 23 vorgesehen. Der Durchmesser der inneren Zylinderflächen 23 und 24 ist größer als derjenige des Zahnwurzelkreises des Innengetriebeteils 22. Die Planetenradscheiben 6 liegen an den inneren Zylinderflächen 23 und 24 an und rollen auf diesen ab. Durch den Kontakt zwischen den inneren Zylinderflächen 23 und 24 und den Planetenradscheiben 6 werden radiale Kräfte übertragen.

Ein besonderes Merkmal der Erfindung richtet auf die Außenfläche des innenverzahnten Getrieberings. Die Außenfläche dieses Rings besteht aus drei Teilen. Zunächst sind zwei umfängliche Gleitflächen 25 und 26 an beiden Seiten der Außenfläche angeordnet. Zwischen diesen umfänglichen Gleitflächen 25 und 26 ist eine ringförmige Nut 27 angebracht. An der kreisförmigen Nut 27 ist eine Einstellverzahnung mit einer Anzahl von Zähnen angeordnet. Die Zahnform kann einem involentem Zahn entsprechen oder einem Zahn mit einfachem dreieckigem Querschnitt oder jede andere Zahnform aufweisen. Der Durchmesser des Zahnkantenkreises der Verzahnung 28 ist geringer als derjenige der am Umfang angebrachten Gleitflächen 25 und 26.

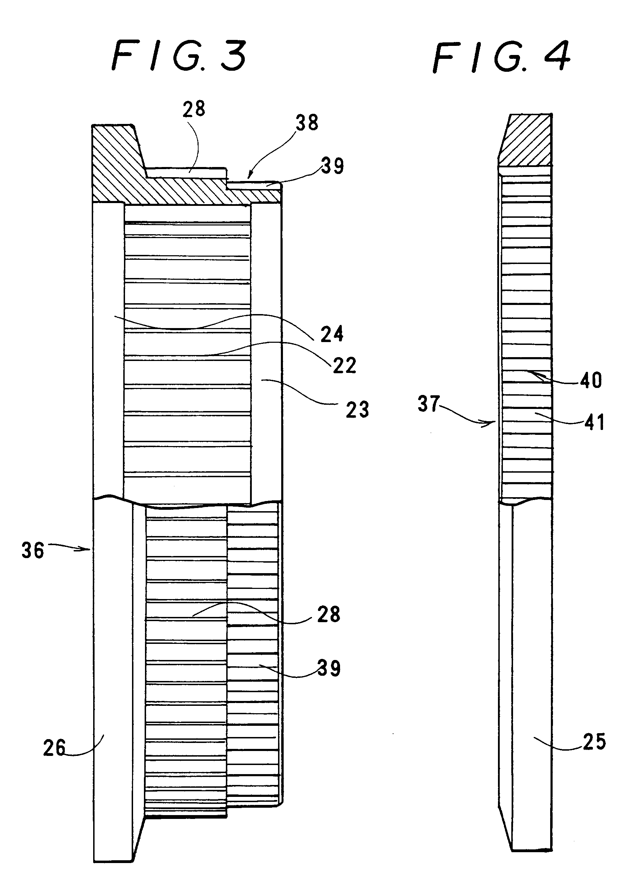

Da der innenverzahnte Ring 3 eine mittlere kreisförmige Nut 27 aufweist, kann er nicht aus einem Stück gefertigt sein, selbst wenn er aus Kunststoff bestehen sollte. Deshalb ist beispielsweise dieser innenverzahnte Ring 3 aus den in den Figuren 3 und 4 wiedergegebenen Teilen aufgebaut. Der Hauptring 36 nach Figur 3 kann aus Kunststoff, Aluminium oder gesinterter Eisenlegierung bestehen. Der Nebenring 37 mag aus dem gleichen Werkstoff gefertigt sein. Der Hauptring 36 ist zylindrisch ausgebildet. An der Innenfläche dieses Hauptrings 36 ist die Innenverzahnung 22 vorgesehen und sind die inneren Zylinderflächen 23 und 24 angebracht. Die Nut 27 mit dem Einstellzahn 28 ist in der Mitte an der Außenfläche des Hauptrings 36 angeordnet. Die Gleitfläche 26 ist an der einen Seite der Außenfläche vorgesehen. An der anderen Seite der Außenfläche ist eine zylindrische Abstufung 38 vorgesehen. Diese Abstufung 38 ist im Durchmesser geringer als der Zahnkreis des Einstellzahns 38. An der zylindrischen Abstufung 38 ist ein äußerer Keilnutzahn 39 axial angeordnet, der zur Verbindung des Hauptrings 36 mit dem Nebenring 37 dient. Der Nebenring 37 ist von geringerer Breite. Ihm fehlen die Elemente der Innenfläche des innenverzahnten Rings, und die Außenfläche des Nebenrings 37 entspricht der anderen Gleitfläche 25. An der Innenfläche 40 weist der Nebenring 37 eine innere Keilnutverzahnung 41 auf, deren Zähne axial eingeschnitten sind.

Der gesamte innenverzahnte Ring 3 ergibt sich aus dem festen Eingriff der äußeren Keilnutverzahnung 39 des Hauptrings 36 in die innere Keilnutverzahnung 41 des Nebenring 37. Der gesamte Innenverzahnungsring 3 ist deshalb stabil, weil kein Spiel zwischen der Innen- und Außen-Nutverzahnung besteht. Selbstverständlich können auch außer einer Kerbverzahnung andere Verbindungselemente Verwendung finden. Besteht deren Innenverzahnungsring aus Kunststoff, so wird der lediglich glatte zylindrische Stufen aufweisende Hauptring mit dem ebenfalls lediglich glatte Innenflächen aufweisenden Nebenring durch Adhäsionskräfte oder durch Ultraschallschweißung verbunden.

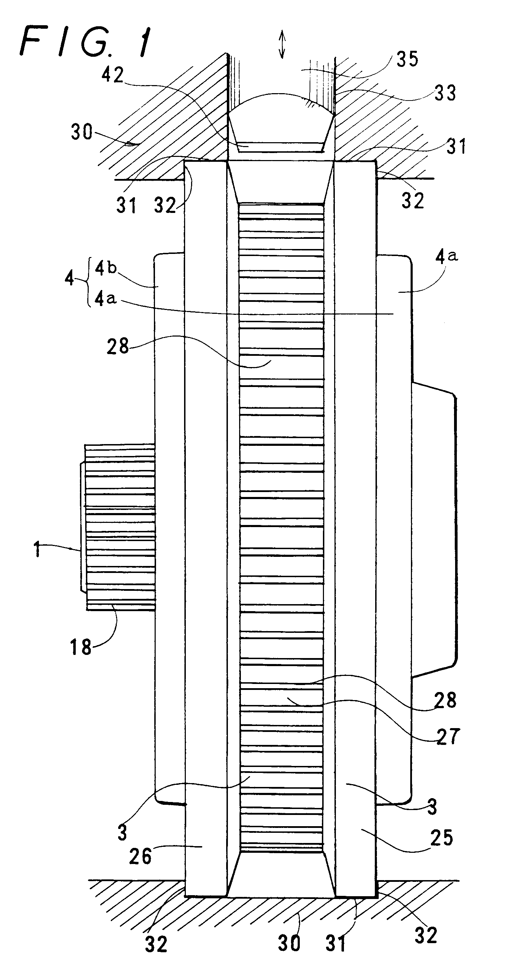

Die Figur 1 zeigt den Zustand, in welchem der innenverzahnte Ring 3 in einem Lagerelement 30 drehbar gelagert ist. Bei dem hier wiedergegebenen Ausführungsbeispiel ist das Lagerelement 30 eine Ausnehmung, bestehend aus einer inneren Zylinderwand 31 und zwei Seitenwänden 32. Der Innendurchmesser der inneren Zylinderwand 31 entspricht dem Durchmesser der Gleitflächen 25 und 26. Der Abstand zwischen den beiden Seitenwänden 32 entspricht der Breite des innenverzahnten Rings 3. Die Gleitflächen 25 und 26 des Innenrings 3 gleiten in der Berührung auf der inneren zylindrischen Wand 31 des Lagerelements 30. Die Seitenflächen des Innenrings 3 berühren und gleiten auf den Seitenwänden 32 des Lagerelements 30. Auf diese Weise vermag der innenverzahnte Ring 3 um die Mittelachse des Sonnenrades 1 und des Planetenradträgers 4 zu rotieren.

An einer bestimmten Stelle des Lagerelements 30 ist in radialer Richtung eine Führungsbohrung 33 angebracht. An einer Anschlageinrichtung 35 ist sie gleitbar in dieser Führungsbohrung 33 vorgesehen. Die Anschlageinrichtung kann sich in der Bohrung 33 hin und her bewegen. Eine entsprechende Einrichtung zur Bewegung der Anschlageinrichtung 35 ist vorgesehen, jedoch in der Zeichnung nicht dargestellt. Beispielsweise kann ein Solenoid, ein motorgetriebener Nocken oder ein eine motorgetriebene Schwinge oder dergleichen als Bewegungsmittel dienen. Das Anschlagelement 35 weist an seinem Ende eine Klaue 42 oder dergleichen auf, diese Anschlagklaue besteht aus einem oder mehreren Zähnen, deren Querschnitt der gleiche ist wie der Zwischenraum zwischen den Einstellzähnen 28. Und wenn die Betätigungseinrichtung den Anschlag 35 vorwärts bewegt, reicht die Anschlagklaue 42 in den Zwischenraum zwischen den Zähnen 28. Auf diese Weise wird der innenverzahnte Ring 3 fixiert. Wie bei üblichen Planetenradgetrieben kann der festgestellte Innnenring 3, die Reaktionsdrehmomente des Sonnenrades und des Planetenradträgers aufnehmen. Dadurch wird eine verminderte Ausgangsdrehung auf den Träger 4 übertragen. Dies ist der Transmissionszustand. Wird der Anschlag 35 mittels der Betätigungseinrichtung zurückbewegt, gelangt die Anschlagklaue 42 außer Eingriff mit dem Zahnzwischenraum. Hierdurch kann der innenverzahnte Ring 3 frei rotieren. Dadurch wird kein Drehmoment von dem Sonnenrad auf den Träger übertragen, weil der innenverzahnte Ring 3 infolge seiner freien Drehung kein Drehmoment aufnimmt. Bei dem Planetenradgetriebe können die Sperrstellung und die Transmissionsstellung beliebig abgewechselt werden durch die Vorwärts- oder Rückwärtsbewegung der Anschlageinrichtung 35, weil der gesamte Bereich der mittleren Nut 27 Einstellzähne aufweist.

Im folgenden werden kurz die für das Getriebe verwendeten Werkstoffe erläutert. Das Sonnenrad 1 kann aus gesinterter Eisenlegierung, Zink, Aluminium oder einem Kunststoff bestehen. Das Planetenrad 6 kann aus Kunststoff, gesinterter Eisenlegierung, Zink oder Stahl hergestellt sein. Der Planetenradteil 7 kann aus Kunststoff, Zink, gesinterter Eisenlegierung bestehen, und der Träger 4 mag aus Kunststoff, gesinterter Eisenlegierung, Aluminium, Zink oder Stahl gefertigt sein.

Bei der in der Zeichnung wiedergegebenen Ausführungsform ist das Lager 30 als Gleitlager ausgestaltet. Es kann auch durch ein Radiallager ersetzt werden. In diesem Fall werden die Gleitflächen 25 und 26 durch Flächen mit ringförmigen Nuten an der Außenseite ersetzt. Die inneren Kreisflächen 31 werden dann mit zwei kreisförmigen Nuten versehen, die den Nuten am Umfang des innenverzahnten Rings 3 entsprechen. Eine Anzahl von Kugeln wird in dem Zwischenraum zwischen den Nuten des innenverzahnten Rings und denen der Lagerfläche 30 vorgesehen.

7

Der Vorteil der erfindungsgemäßen Ausbildung ist folgender: Zunächst ermöglicht es die Erfindung, die Interception Stellung zu wählen, bei dem der innenverzahnte Ring frei rotiert und das Drehmoment auf den Träger übertragen wird oder aber den Transmissionszustand, in welchem der Innenring festgestellt ist und das Drehmoment auf den Träger übertragen wird. Infolgedessen liefert das Getriebe entweder ein Ausgangsdrehmoment auf den Träger oder aber es liefert kein Drehmoment. Die Funktion des erfindungsgemäßen Planetenradgetriebes ist ähnlich der Kombination eines Reduktionsgetriebes und einer Kupplung, die die Rotation von einer Eingangswelle auf die Ausgangswelle entweder übertragen oder unterbrechen kann. Bei einer Kupplung muß entweder die Eingangswelle oder die Augangswelle in axialer Richtung versetzt sein, um die Wellen einkuppeln oder auskuppeln zu können. Das erfindungsgemäße Planetenradgetriebe kann hingegen die verschiedenen Funktionen durch einfache Vorwärts- oder Rückwärtsbewegung der Anschlageinrichtung 35 in radialer Richtung wechseln, ohne die Wellen in axialer Richtung versetzen zu müssen. Die Änderung des Funktionszustandes ergibt sich schnell und leichter als bei konventionellen Kupplungen. Ein weiterer Vorteil ist der einfache Aufbau. Die Vorrichtung hat zwei Funktionen als Reduktionsgetriebe und als Kupplung. Sie baut wesentlich kleiner als ein Reduktionsgetriebe in Verbindung mit einer Kupplung bei gleicher Kapazität der Drehmomentenübertragung.

**Patentansprüche**

**1.** Verstellbare Getriebeeinheit, bestehend aus einem Planetenradgetriebe mit einem Sonnenrad, einer Anzahl von mit dem Sonnenrad kämmenden und dieses umschließenden Planetenrädern, einem mit den Planetenrädern kämmenden und diese umschließenden innenverzahnten Getriebering und einem die Planetenräder durch Planetenräderwellen drehbar lagernden Planetenradträger, gekennzeichnet durch ein Lager zur drehbaren Lagerung des innenverzahnten Rings und eine Sperreinrichtung zum Sperren der Drehung des innen verzahnten Rings, wobei der innenverzahnte Ring beidseitig Umfangsflächen zur Lagerung in dem Lagerelement und eine Mittelnut in der Mitte der äußeren Umfangsfläche aufweist, und die Mittelnut über ihre gesamte Außenfläche eine Einstellverzahnung aufweist, wobei die Sperrvorrichtung in radialer Richtung vorwärts und rückwärts verstellbar ist und bei der Vorwärtsverstellung des Anschlags der innenverzahnte Ring gesperrt und das Drehmoment von dem Sonnenrad auf den Träger übertragen und bei rückwärtsverstelltem Anschlag der innenverzahnte Ring frei rotiert und kein Drehmoment von dem Sonnenrad auf den Planetenradträger übertragen wird.

**2.** Getriebeeinheit nach Anspruch 1, dadurch gekennzeichnet, daß das Planetenradgetriebe aus dem mittleren Planetenradteil und zwei Planetenradscheiben an beiden Seiten besteht und der innenverzahnte Ring einen Mittelteil und an dessen beiden Seiten innere zylindrische Flächen aufweist, wobei der Durchmesser der Planetenradscheiben größer ist als der Durchmesser des Zahnkantenkreises des Planetenradteils und der Durchmesser der inneren zylindrischen Fläche größer ist als der Durchmesser des Zahnfußkreises des innenverzahnten Ringes.

**3.** Getriebeeinheit nach Anspruch 1, dadurch gekennzeichnet, daß das Lager aus einem Gleitlager besteht.

**4.** Getriebeeinheit nach Anspruch 1, dadurch gekennzeichnet, daß das Lager aus einem Radiallager besteht.

**Claims**

**1.** A timing driving unit using planetary gear assembly comprising a planetary gear assembly having a sun gear, a plurality of planetary gears enclosing and meshing with the sun gear, an internal gear ring enclosing and meshing with the planetary gears and a carrier rotatably supporting the planetary gears by planetary shafts,
a bearing device for rotatably supporting the internal gear ring, and
a stopper device for stopping the rotation of the internal gear, wherein the internal gear includes peripheries on both sides for being supported by the bearing device and a middle groove in the middle of the outer surface, the middle groove has a timing tooth shaped around whole outer surface thereof, the stopper device can move forward or backward in a radial direction, when the stopper device moves forward, the internal gear ring is stopped and torque is transmitted from the sun gear to the carrier and when the stopper device moves backward, the internal gear ring rotates freely and no torque is transmitted from the sun gear to the carrier.

**2.** A timing driving unit as claimed in claim (1), wherein the planetary gear consists of a planetary gear part in the middle and two planetary discs on both sides, the internal gear ring has an internal gear part in the middle and inner cylindrical surfaces on both sides of the inner surface, the diameter of the planetary discs is larger than that of the tooth-edge circle of the planetary gear part and the diameter of the inner cylindrical surface is larger than that of the tooth-root circle of the internal gear.

**3.** A timing driving unit as claimed in claim (1), wherein the bearing device is a sliding bearing.

**4.** A timing driving unit as claimed in claim (1), wherein the bearing device is a radial bearing.

**Revendications**

**1.** Unité d'entraînement de minuterie comportant un ensemble formant engrenage planétaire possédant une roue planétaire, une pluralité de pignons satellites enserrant la roue planétaire et engrenant avec cette dernière, une couronne à denture intérieure entourant les pignons satellites et engrenant avec ces derniers, et un porte-satellites qui supporte, avec possibilité de rotation, les pignons satellites au moyen d'arbres satellites,
un dispositif de palier servant à supporter, la couronne à denture intérieure, de manière qu'elle puisse tourner, et
un dispositif d'arrêt servant à arrêter la rotation de la couronne à denture intérieure, dans laquelle la couronne à denture intérieure comprenant, sur ses deux côtés, des périphéries destinées à être supportées par le dispositif de palier, et une gorge médiane située au centre de la surface extérieure, la gorge médiane possédant une dent de minuterie, dont l'ensemble de la surface extérieure est profilé, le dispositif d'arrêt peut avancer ou reculer dans une direction radiale, auquel cas, lorsque le dispositif d'arrêt avance, la couronne à denture intérieure est bloquée et le couple est transmis de la roue planétaire au porte-satellites alors que, lorsque le dispositif d'arrêt recule, la couronne à denture intérieure tourne librement et aucun couple n'est transmis par la roue planétaire au porte-satellites.

**2.** Unité d'entraînement de minuterie selon la revendication 1, dans laquelle le pignon satellite est constitué par une partie située au centre et deux disques satellites situés des deux côtés, la couronne à denture intérieure possède une partie située au centre et des surfaces intérieures cylindriques situées des deux côtés de la surface intérieure, le diamètre des disques satellites est supérieur à celui du cercle des sommets des dents de la partie du pignon satellite, et le diamètre de la surface intérieure cylindrique est supérieur à celui du cercle de la base des dents de la couronne à denture intérieure.

**3.** Unité d'entraînement de minuterie selon la revendication 1, dans lequel le dispositif de palier est un palier lisse.

**4.** Unité d'entraînement de minuterie selon la revendication 1, dans lequel le dispositif de palier est un palier radial.

# FIG. 1

# F I G. 2

# F I G. 3

# F I G. 4